# EUROPEAN PATENT APPLICATION

(11) **EP 1 770 958 A2**
(43) Date of publication of application: **04.04.2007**
(21) Application number: 06019468.5
(22) Date of filing: 18.09.2006
(51) Int. Cl.: H04L 29/08

(54) **Home network system using fuel cell and controlling method thereof**

(30) Priority: 28.09.2005 KR 20050090830
(71) Applicant: LG Electronics Inc., Yongdungpo-gu Seoul (KR); LG Chem, Ltd., Yongdungpo-Gu Seoul (KR)
(72) Inventor: Kim, Ki-Dong, Janggi-Dong Gimpo Gyeonggi-Do (KR); Ko, Seung-Tae, Geumcheon-Gu Seoul (KR)
(74) Representative: TER MEER - STEINMEISTER & PARTNER GbR

(57) **Abstract**

A home network system using a fuel cell, comprises: a plurality of home electric units for receiving remote control data, analyzing the received remote control data, and thus performing each controlling operation; and a communication server for receiving the remote control data from outside through an internet, and transmitting the received remote control data to the plural home electric units.

## Description

### BACKGROUND OF THE INVENTION

### 1. Field of the Invention

The present invention relates to a home network system, and more particularly, to a home network system using a fuel cell capable of enhancing a user's comfort and a controlling method thereof.

### 2. Description of the Background Art

A home network system serves to control home electric devices through an inner network by mounting a network connection unit in the home electric devices.

As the number of internet users is increased and time for which the users stay at home is decreased, demand for the home network system for controlling home electric devices by the user outdoors through the internet is being increased.

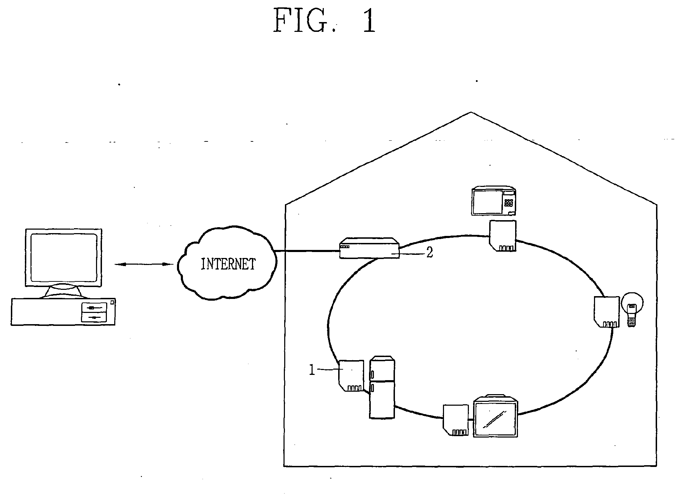

FIG. 1 is a view showing a construction of a home network system in accordance with the conventional art.

As shown in FIG. 1, the conventional home network system comprises a network connection unit 1 mounted in a plurality of home electric devices connected to a home network for transmitting/receiving data; and a home server 2 for controlling data transmission/reception of the home network through the network connection unit 1.

The home server 2 transmits/receives data with internet. A user accesses to the home server 2 through an external internet by using home electric devices such as a personal computer (PC), a notebook, a personal digital assistant (PDA), a mobile phone, etc., and then accesses to the home electric devices connected to the internet.

However, the conventional home network system has the following problems. Since a home PC is connected to an external network, power has to be supplied to the home PC for 24 hours everyday for an external access through the network. Accordingly, a power consumption at home is increased.

Furthermore, since power has to be re-supplied to the home PC when the home PC is turned off, the user's convenience is lowered.

### BRIEF DESCRIPTION OF THE INVENTION

Therefore, an object of the present invention is to provide a home network system using a fuel cell capable of enhancing a user's comfort by installing a network connection unit for connection with an external network at a fuel cell system which generates power for 24 hours everyday and thus by performing a home networking through the network connection unit by a user, and a controlling method thereof.

To achieve these and other advantages and in accordance with the purpose of the present invention, as embodied and broadly described herein, there is provided a home network system using a fuel cell, comprising: a plurality of home electric units for receiving remote control data, analyzing the received remote control data, and thus performing a controlling operation; and a communication server for receiving the remote control data from outside through an internet, and transmitting the received remote control data to the plural home electric units.

To achieve these and other advantages and in accordance with the purpose of the present invention, as embodied and broadly described herein, there is also provided a method for controlling a home network system using a fuel cell, comprising: transmitting remote control data for remote-controlling an optional home electric unit to a communication server through an internet by a user; processing the remote control data and transmitting it to the corresponding home electric unit by the communication server; and analyzing the remote control data and performing a controlling operation on the basis of the analysis result by the corresponding home electric unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic view showing a construction of a home network system in accordance with the conventional art;
FIG. 2 is a block diagram showing a construction of a home network system using a fuel cell according to the present invention;
FIG. 3 is a block diagram showing a construction of a network connection unit of the home network system using a fuel cell according to a first embodiment of the present invention;
FIG. 4 is a block diagram showing a construction of the network connection unit of the home network system using a fuel cell according to a second embodiment of the present invention;
FIG. 5 is a block diagram showing a construction of the network connection unit of the home network system using a fuel cell according to a third embodiment of the present invention;
FIG. 6 is a block diagram showing a construction of the network connection unit of the home network system using a fuel cell according to a fourth embodiment of the present invention;
FIG. 7 is a flowchart showing a method for controlling a home network system using a fuel cell according to the present invention.

### DETAILED DESCRIPTION OF THE INVENTION

Reference will now be made in detail to the preferred embodiments of the present invention, examples of which are illustrated in the accompanying drawings.

Hereinafter, a home network system using a fuel cell capable of enhancing a user's comfort by installing a network connection unit for connection with an external network at a fuel cell system which generates power for 24 hours everyday and thus by performing a home networking through the network connection unit by a user, and a controlling method thereof will be explained in more detail with reference to the attached drawings.

Generally, a fuel cell system serves to directly convert fuel energy into electric energy. The fuel cell system is provided with an anode and a cathode at both sides of a high molecule electrolyte membrane. As a fuel of hydrogen is electrochemically oxidized at the anode and oxygen is electrochemically deoxidized at the cathode, electrons are generated. The fuel cell system generates electric energy as the generated electrons move.

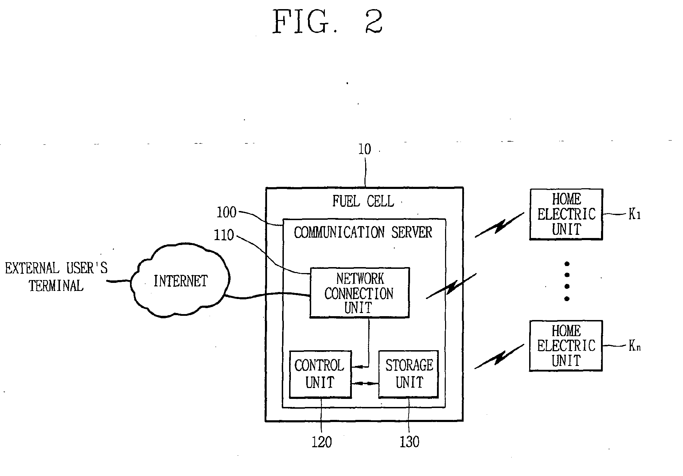

FIG. 2 is a block diagram showing a construction of a home network system using a fuel cell according to the present invention.

As shown in FIG. 2, the home network system using a fuel cell according to the present invention comprises a plurality of home electric devices K1~Kn, and a fuel cell 10 having a communication server 100 therein.

The plural home electric units K1~Kn receive remote control data, and analyzes the received remote control data thereby to perform a controlling operation.

The communication server 100 receives the remote control data from outside through an internet, and transmits the received remote control data to the plural home electric units K1~Kn.

The remote control data comprises an identification code for identifying each home electric unit, and data for a control command.

The communication server 100 is mounted in the fuel cell 10, and is performed as an active state for 24 hours everyday.

The communication server 100 comprises a network connection unit 100, a storage unit 130, and a control unit 120.

The storage unit 120 stores specific codes for identifying the plural home electric units K1~Kn.

The control unit 120 extracts an identification code from the remote control data, compares the extracted identification code with the specific codes stored in the storage unit 120, and controls the remote control data to be transmitted to the corresponding home electric unit K1~Kn.

The network connection unit 110 receives the external remote control data through an internet, transmits the remote control data to a corresponding home electric unit (K1~Kn), and transmits information data received from the corresponding home electric unit (K1~Kn) to outside through the internet.

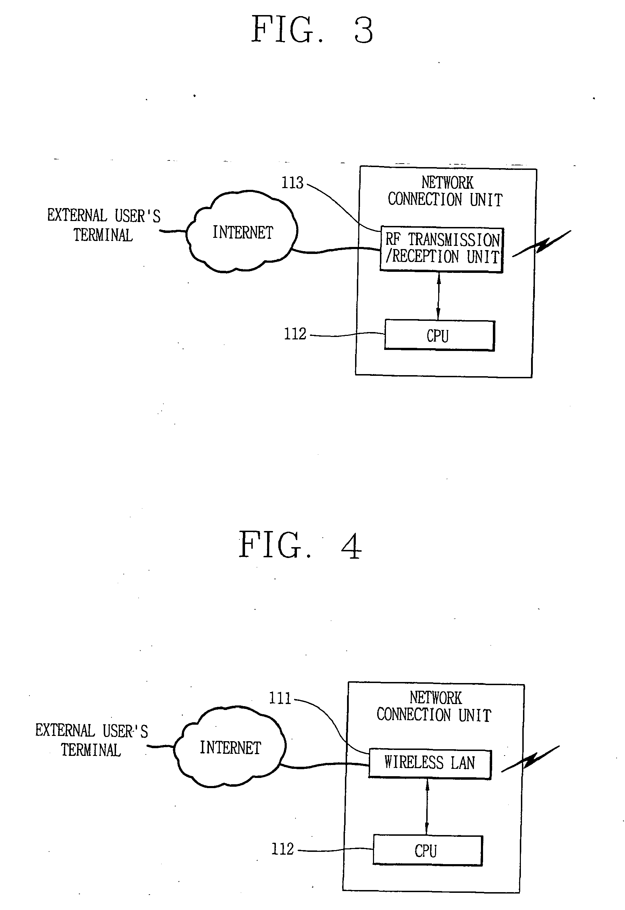

As shown in FIG. 3, the network connection unit 110 comprises an RF transmission/reception unit 113 for transmitting remote control data received through an internet to a corresponding home electric unit (K1~Kn) after converting into RF remote control data according to an RF protocol, and receiving RF information data from the corresponding home electric unit (K1~Kn); and a CPU 112 for converting the RF information data outputted from the RF transmission/reception unit 113 into a network transmission protocol, and transmitting the converted data to a user's terminal through an internet.

As shown in FIG. 4, the network connection unit 110 comprises a wireless LAN 111 for wirelessly transmitting remote control data received through an internet to a corresponding home electric unit (K1~Kn) after converting into wireless remote control data according to a wireless protocol, and receiving wireless information data from the corresponding home electric unit (K1~Kn); and a CPU 112 for converting the wireless information data received from the corresponding home electric unit (K1~Kn) through the wireless LAN 111 into a network transmission protocol, and transmitting the converted data to a user's terminal through an internet.

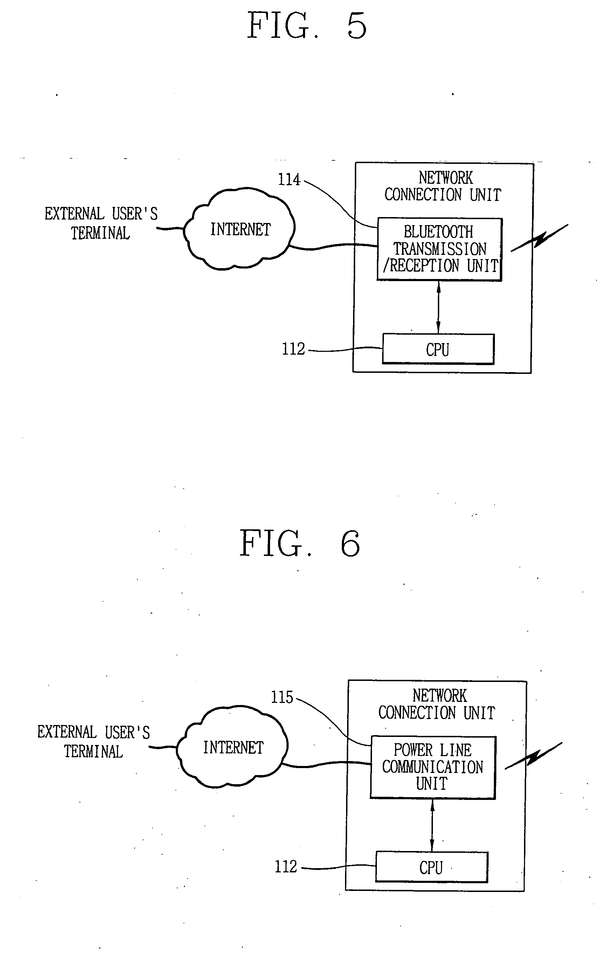

As shown in FIG. 5, the network connection unit 110 comprises a bluetooth transmission/reception unit 114 for transmitting remote control data received through an internet to a corresponding home electric unit (K1~Kn) after converting into bluetooth remote control data according to a bluetooth protocol, and receiving bluetooth information data from the corresponding home electric unit (K1~Kn); and a CPU 112 for converting the bluetooth information data outputted from the bluetooth transmission/reception unit 114 into a network transmission protocol, and transmitting the converted data to a user's terminal through an internet.

As shown in FIG. 6, the network connection unit 110 comprises a power line communication unit 115 for transmitting remote control data received through an internet to a corresponding home electric unit (K1~Kn) after converting into power line communication remote control data according to a power line communication protocol, and receiving power line communication information data from the corresponding home electric unit (K1~Kn); and a CPU 112 for converting the power line communication information data outputted from the power line communication unit 115 into a network transmission protocol, and transmitting the converted data to a user's terminal through an internet.

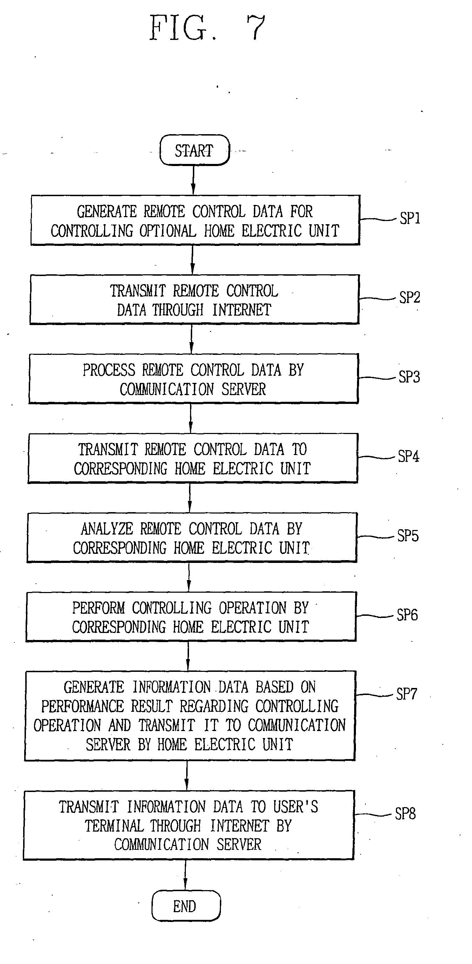

A method for controlling a home network system using a fuel cell according to the present invention will be explained with reference to FIG. 7.

FIG. 7 is a flowchart showing a method for controlling a home network system using a fuel cell according to the present invention.

As shown, the method for controlling a home network system using a fuel cell according to the present invention comprises transmitting remote control data for remote-controlling an optional home electric unit (K1~Kn) to a communication server through an internet by a user (SP1, SP2); processing the remote control data and transmitting it to the corresponding home electric unit (K1~Kn) by the communication server (SP3, SP4); analyzing the remote control data and performing a controlling operation on the basis of the analysis result by the corresponding home electric unit (K1~Kn) (SP5, SP6); transmitting information data for informing a performance result regarding the remote control data to the communication server by the corresponding home electric unit (K1~Kn) (SP7); and transmitting the information data to a user's terminal through an internet by the communication server (SP8).

The method for controlling a home network system using a fuel cell according to the present invention will be explained in more detail.

First, remote control data for controlling an optional home electric unit (K1~Kn) is generated by a user (SP1), and the generated remote control data is transmitted to the communication server 100 through an internet (SP2).

Herein, a wireless internet or a mobile communication network can be used instead of the wire internet.

The communication server 100 processes the remote control data thereby to transmit it to the corresponding home electric unit (K1~Kn) (SP3, SP4).

More concretely, the control unit 120 of the communication server 100 receives external remote control data through an internet, extracts an identification code from the remote control data, compares the extracted identification code with specific codes stored in a storage unit, and controls the remote the network connection unit 110 so that the remote control data can be transmitted to a selected home electric unit (K1~Kn) according to the comparison result.

Then, the selected home electric unit (K1~Kn) receives the remote control data outputted from the network connection unit 110 thus to analyze the received data (SP5), and performs a controlling operation according to the analysis result (SP6).

Then, the selected home electric unit (K1~Kn) generates information data for informing a current state thereof based on a result of the controlling operation, and transmits the generated information data to the communication server 100 (SP7).

Then, the communication server 100 processes the information data thus to transmit it to a user's terminal through an internet (SP8). The user certifies a state of the selected home electric unit (K1~Kn) based on the result of the controlling operation.

Hereinafter, a method for processing remote control data and information data by the network connection unit 110 of the communication server 100 according to a first embodiment of the present invention will be explained in more detail.

The wireless LAN 111 of the network connection unit 110 receives remote control data through an internet, and applies the received data to the CPU 112.

The CPU 112 converts the remote control data into wireless remote control data according to a wireless protocol, and controls the converted wireless remote control data to be wirelessly transmitted to a corresponding home electric unit (K1~Kn) through the wireless LAN 111.

The home electric units K1~Kn are respectively provided with a wireless LAN (not shown) for communicating with the network connection unit 110.

The corresponding home electric unit (K1~Kn) analyzes the wireless remote control data thus to perform a controlling operation according to the analysis result, and wirelessly transmits information data based on the performance result to the wireless LAN 111 of the network connection unit 110.

The wireless LAN 111 of the network connection unit 110 converts the information data received from a corresponding home electric unit (K1~Kn) into network information data based on a network transmission protocol by a control of the CPU 112, and transmits the converted network information data to an external user's terminal through an internet.

Herein, a wireless internet or a mobile communication network can be used instead of the wire internet.

A method for processing remote control data and information data by the network connection unit 110 of the communication server 100 according to a second embodiment of the present invention will be explained in more detail.

The RF transmission/reception unit 113 of the network connection unit 110 receives remote control data through an internet, and applies the received data to the CPU 112.

The CPU 112 converts the remote control data into RF remote control data according to an RF communication protocol, and controls the converted RF remote control data to be transmitted to a corresponding home electric unit (K1~Kn) through the RF transmission/reception unit 113.

The corresponding home electric unit (K1~Kn) analyzes the RF remote control data thus to perform a controlling operation according to the analysis result, and generates information data based on the controlling result thus to wirelessly transmit it to the RF transmission/reception unit 113.

The home electric units K1~Kn are respectively provided with an RF transmission/reception unit (not shown) for communicating with the network connection unit 110.

The RF transmission/reception unit 113 converts the information data received from the corresponding home electric unit (K1~Kn) into network information data based on a network transmission protocol by a control of the CPU 112, and transmits the converted network information data to an external user's terminal through an internet.

Herein, a wireless internet or a mobile communication network can be used instead of the wire internet.

A method for processing remote control data and information data by the network connection unit 110 of the communication server 100 according to a third embodiment of the present invention will be explained in more detail.

The bluetooth transmission/reception unit 114 of the network connection unit 110 receives remote control data through an internet, and applies the received data to the CPU 112.

The CPU 112 converts the remote control data into bluetooth remote control data based on a bluetooth communication protocol, and transmits the converted bluetooth remote control data to a corresponding home electric unit (K1~Kn) through the bluetooth transmission/reception unit 113.

The corresponding home electric unit (K1~Kn) analyzes the bluetooth remote control data thus to perform a controlling operation according to the analysis result, and generates information data based on the performance result thus to wirelessly transmit it to the bluetooth transmission/reception unit 114.

The home electric units K1~Kn are respectively provided with a bluetooth transmission/reception unit (not shown) for communicating with the network connection unit 110.

The bluetooth transmission/reception unit 114 converts the information data received from the corresponding home electric unit (K1~Kn) into network information data based on a network transmission protocol by a control of the CPU 112, and transmits the converted network information data to an external user's terminal through an internet.

Herein, a wireless internet or a mobile communication network can be used instead of the wire internet.

A method for processing remote control data and information data by the network connection unit 110 of the communication server 100 according to a fourth embodiment of the present invention will be explained in more detail.

The bluetooth transmission/reception unit 114 of the network connection unit 110 receives remote control data through an internet, and applies the received data to the CPU 112.

The power line communication unit 115 of the network connection unit 110 receives remote control data through an internet, and applies the received remote control data to the CPU 112.

The CPU 112 converts the remote control data into power line communication remote control data according to a power line communication protocol, and controls the converted power line communication remote control data to be transmitted to a corresponding home electric unit (K1~Kn) through the power line communication unit 115.

The corresponding home electric unit (K1~Kn) analyzes the power line communication remote control data thus to perform a controlling operation according to the analysis result, and generates information data based on the performance result thus to transmit it to the power line communication unit 115 through a power line.

The home electric units K1~Kn are respectively provided with a power line communication unit (not shown) for communicating with the network connection unit 110.

The power line communication unit 115 converts the information data received from the corresponding home electric unit (K1~Kn) into network information data based on a network transmission protocol by a control of the CPU 112, and transmits the converted network information data to -an external user's terminal through an internet.

Herein, a wireless internet or a mobile communication network can be used instead of the wire internet.

As aforementioned, in the home network system using a fuel cell and the controlling method thereof according to the present invention, the network connection unit for connection with an external network is installed at a fuel cell system for generating power for 24 hours everyday. Accordingly, the user can perform a home networking through the network connection unit of the fuel cell system from outside, and thus the user's comfort is enhanced.

Furthermore, in the home network system using a fuel cell according to the present invention, since the communication server is electrically connected to the fuel cell, an unstable operation of the home network system due to an power off and an external power variation can be prevented.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A home network system using a fuel cell, comprising:
a plurality of home electric units for receiving remote control data, analyzing the received remote control data, and thus performing each controlling operation; and
a communication server for receiving the remote control data from outside through an internet, and transmitting the received remote control data to the plural home electric units.

2. The home network system of claim 1, wherein the remote control data comprises identification codes for identifying the home electric units, and data for a control command.

3. The home network system of claim 1, wherein the communication server comprises:
a network connection unit for receiving the remote control data through an internet, transmitting the remote control data to the corresponding home electric unit, and transmitting information data received from the corresponding home electric unit to outside through the internet;
a storage unit for storing specific codes for identifying the plural home electric units; and
a control unit for extracting an identification code from the remote control data, comparing the extracted identification code with the specific codes stored in the storage unit, and controlling the remote control data to be transmitted to the corresponding home electric unit according to the comparison result.

4. The home network system of claim 3, wherein the network connection unit is implemented as one of an RF transceiver, a wireless LAN, a bluetooth, and a power line communication unit.

5. The home network system of claim 3, wherein the network connection unit wirelessly transmits the remote control data for controlling each of the home electric units to the home electric units, and receives information data based on a performance result regarding the remote control data from each of the home electric units.

6. The home network system of claim 3, wherein the network connection unit comprises:
an RF transmission/reception unit for transmitting the remote control data received through an internet to a corresponding home electric unit after converting into RF remote control data according to an RF protocol, and receiving RF information data from the corresponding home electric unit; and
a CPU for converting the RF information data outputted from the RF transmission/reception unit into a network transmission protocol, and transmitting the converted data to a user's terminal through an internet.

7. The home network system of claim 3, wherein the network connection unit comprises:
a wireless LAN for wirelessly transmitting the remote control data received through an internet to a corresponding home electric unit after converting into wireless remote control data according to a wireless protocol, and receiving wireless information data from the corresponding home electric unit; and
a CPU for converting the wireless information data received from a corresponding home electric unit through the wireless LAN into a network transmission protocol, and transmitting the converted data to a user's terminal through an internet.

8. The home network system of claim 4, wherein the network connection unit comprises:
a bluetooth transmission/reception unit for transmitting the remote control data received through an internet to a corresponding home electric unit after converting into bluetooth remote control data according to a bluetooth protocol , and receiving bluetooth information data from the corresponding home electric unit; and
a CPU for converting the bluetooth information data outputted from the bluetooth transmission/reception unit into a network transmission protocol, and transmitting the converted data to a user's terminal through an internet.

9. The home network system of claim 3, wherein the network connection unit comprises:
a power line communication unit for transmitting the remote control data received through an internet to a corresponding home electric unit after converting into power line communication remote control data according to a power line communication protocol, and receiving power line communication information data from the corresponding home electric unit; and
a CPU for converting the power line communication information data outputted from the power line communication unit into a network transmission protocol, and transmitting the converted data to a user's terminal through an internet.

10. The home network system of claim 1, wherein the communication server is electrically connected to the fuel cell, and is performed as an active state for 24 hours everyday.

11. A method for controlling a home network system using a fuel cell, comprising:
transmitting remote control data for remote-controlling an optional home electric unit to a communication server through an internet by a user;
processing the remote control data and transmitting it to the corresponding home electric unit by the communication server; and
analyzing the remote control data and performing a controlling operation based on the analysis result by the corresponding home electric unit.

12. The method of claim 11, further comprising:
transmitting information data for informing a performance result regarding the remote control data to the communication server by the home electric unit; and
transmitting the information data to a user's terminal through an internet -by the communication server.

13. The method of claim 11, wherein the step of transmitting information data comprises activating the communication server by receiving power from the fuel cell.

14. The method of claim 11, wherein the step of transmitting the remote control data to the corresponding home electric unit comprises:
extracting an identification code from the remote control data; and
comparing the extracted identification code with specific codes for identifying the home electric units, and selecting a home electric unit to which the remote control data is to be transmitted according to the comparison result.

15. The method of claim 11, wherein the step of transmitting the remote control data to the corresponding home electric unit comprises converting the remote control data received through the internet into RF remote control data according to an RF protocol.

16. The method of claim 11, wherein the step of transmitting the remote control data to the corresponding home electric unit comprises converting the remote control data received through the internet into wireless remote control data according to a wireless protocol.

17. The method of claim 11, wherein the step of transmitting the remote control data to the corresponding home electric unit -comprises converting the remote control data received through the internet into bluetooth remote control data according to a bluetooth protocol.

18. The method of claim 11, wherein the step of transmitting the remote control data to the corresponding home electric unit comprises converting the remote control data received through the internet into power line communication remote control data according to a power line communication protocol.

19. The method of claim 11, further comprising storing specific codes for identifying a plurality of the home electric units.
